# EUROPEAN PATENT APPLICATION

(11) **EP 4 711 091 A1**
(43) Date of publication of application: **18.03.2026**
(21) Application number: 23939327.5
(22) Date of filing: 04.12.2023
(51) Int. Cl.: B25J 5/00, B25J 9/00, B25J 13/00, B25J 19/00, B62D 57/02, B60G 13/00

(54) **WHEEL FLOATING MECHANISM AND MOBILE ROBOT**

(30) Priority: 02.06.2023 CN 202310651034
(71) Applicant: Xyz Robotics China Inc., Shanghai 201108 (CN)
(72) Inventor: LIU, Sixing, Shanghai 201108 (CN)
(74) Representative: FRKelly
(86) International application number: PCT/CN2023/136052
(87) International publication number: WO 2024/244358

(57) **Abstract**

A wheel-floating mechanism for a mobile robot includes a suspension guide seat with a guide plate and upper and lower end covers. A lead-screw assembly, consisting of a ball screw and nut, is supported between the covers by bearings. A suspension connection plate, driven by the screw nut, mounts the wheel. A braking mechanism locks the ball screw in response to wheel-control signals. A compression spring encircles the ball screw, connecting the suspension plate to the upper end cover. This design maintains stable manipulator posture during motion and ensures all four wheels remain in contact with the ground, improving traction and reducing robot sway.

## Description

### TECHNICAL FIELD

The present disclosure relates to industrial robots, and in particular to a wheel floating mechanism and a mobile robot.

### BACKGROUND

Industrial robots are intelligent devices equipped with sensors, objective lens, and electro-optical systems, which can quickly sort and transport goods.

More and more visual sensors and force sensors will be used in the industrial robots, and the industrial robots will become increasingly intelligent. With advances in sensing and identification systems, artificial intelligence, and other technologies, robots have evolved from being controlled unidirectionally to storing and utilizing data on their own, thereby gradually becoming more information driven.

### SUMMARY

In view of the defects in the prior art, the present disclosure aims to provide a wheel floating mechanism and a mobile robot. In order to expand the application scenarios and scope of industrial robots, an industrial robot is mounted on a mobile base to make a mobile robot, so as to realize the movement of the industrial robot to achieve mobile depalletizing, mobile selection, and other functions. However, when a mobile robot moves on the ground, it often encounters uneven ground causing the driving wheel of the mobile robot not to touch the ground, thereby leading to slipping and shaking, which is not conducive to the smooth operation of the industrial robot. If a conventional floating device is directly installed on the moving base, when the industrial robot is in the depalletizing or selecting state, the existence of the floating device will produce vibration, which affects the grasping accuracy of the industrial robot, causing problems of failure to grasp, unstable grasping, and dropping parts.

A wheel floating mechanisms provided according to the present disclosure comprises: a suspension guide seat comprising a guide plate, an upper end cover, and a lower end cover, wherein the upper end of the guide plate is provided with the upper end cover, and the lower end thereof is provided with the lower end cover; a ball lead screw assembly that comprises a screw and a screw nut, wherein the upper end of the ball screw is connected to the upper end cover through a first bearing, the lower end thereof is connected to the lower end cover through the second bearing, and the screw nut is rotatably connected to the ball screw; a suspension connection plate that is connected to the ball screw through the screw nut and is used for installing a wheel; a braking mechanism used for braking the ball screw after receiving a wheel control signal; and a compression spring sleeved on the outer side of the ball screw with the lower end thereof connected to the suspension connection plate and the upper end thereof connected to the upper end cover.

Optionally, when the braking mechanism is powered off, the braking mechanism brakes the ball screw, thereby achieving rigid support of the wheel; and when the braking mechanism is powered on, the ball screw can rotate in the first bearing and the second bearing as driven by the screw nut, and the screw nut moves up and down along the ball screw to realize floating buffering of the wheel.

Optionally, a first guide rail and a second guide rail are respectively provided on the front side surface of the guide plate and disposed on two sides of the compression spring; the suspension connection plate is connected to the first guide rail through a first sliding block and is connected to the second guide rail through a second sliding block.

Optionally, the upper side surface of the suspension connection plate is provided with an upper limit rod, and when the suspension connection plate moves upward, the upper limit rod abuts against the upper end cover for limiting; and the lower side surface of the suspension connection plate is provided with a lower limit rod, and when the suspension connection plate moves downward, the lower limit rod abuts against the lower end cover for limiting.

Optionally, a free end of the limit rods is provided with a shock absorbing pad for damping when the upper limit rod and the upper end cover are in contact and for damping when the lower limit rod and the lower end cover are in contact.

Optionally, the braking mechanism comprises an electromagnet, a braking shaft, a movable brake pad, and a fixed brake pad; the movable brake pad is connected to the fixed brake pad through an elastic member; the sleeve of the braking shaft is sleeved on the ball screw, and the main body plate of the braking shaft is arranged between the movable brake pad and the fixed brake pad; the electromagnet is used for applying an electromagnetic force to the movable brake pad; when the electromagnet is powered on, the electromagnet absorbs the movable brake pad, and at this moment, the elastic member is in a compressed state, and the ball screw can rotate; and when the electromagnet is powered off, the movable brake pad is pulled by the elastic pad to move towards the fixed brake pad to brake the ball screw through the braking shaft.

Optionally, the upper end cover is provided with a first mounting hole penetrating in the thickness direction; an upper bearing seat is disposed inside the first mounting hole; the first bearing is disposed inside the upper bearing seat; the lower end cover is provided with a second mounting hole penetrating in the thickness direction; and the second bearing is disposed inside the second mounting hole.

Optionally, the upper bearing seat comprises a fixed end cover and a limit sleeve; one end of the limit sleeve is connected to one side surface of the fixed end cover; the limit sleeve passes through the first mounting hole; the fixed end cover is positioned on the upper side surface of the upper end cover; a bearing mounting hole is provided on the fixed end cover; the first bearing is disposed inside the bearing mounting hole; the first bearing is disposed inside the bearing mounting hole; and the bearing mounting hole is in communication with the limit sleeve, so that the upper end of the ball screw passes through the limit sleeve to be connected to the first bearing.

Optionally, the braking mechanism comprises an electromagnet, an upper cover plate, a movable brake pad, and a fixed brake pad; the movable brake pad is connected to that electromagnet through an elastic member; the sleeve of the fixed brake pad is sleeved on the ball screw, and the main brake plate of the fixed brake pad is arranged between the movable brake plate and the upper cover plate; the electromagnet is used for applying an electromagnetic force to the movable brake pad; when the electromagnet is powered on, the electromagnet absorbs the movable brake pad, and at this moment, the elastic member is in a compressed state, and the ball screw can rotate; and when the electromagnet is powered off, the movable brake pad is driven by the elastic pad to move towards the fixed brake pad to brake the ball screw.

Optionally, the inner cavity diameter of the limit sleeve is larger than the inner diameter of the bearing mounting hole; the upper end of the compression spring is arranged in the limit sleeve and abuts on the inner side surface of the fixed end cover.

A mobile robot provided according to the present disclosure comprises the wheel floating mechanism, and further comprises: a mobile base used for moving to any position or pausing at any position according to a received control command; a robotic arm disposed on the mobile base and for moving a target box body conveyed by a conveyor belt to a target position or moving a target box body on a material release position to the conveyor belt; wherein the angular end of the mobile base is provided with the wheel floating mechanism; the wheel floating mechanism is provided with a wheel, and the wheel floating mechanism is used for floating buffering the wheel so as to remain stable on uneven ground or rigidly support the wheel; and the wheel is used for driving the mobile base to move.

In the present disclosure, when the braking mechanism brakes the ball screw, the screw nut cannot move up and down along the ball screw at this moment, and the wheel floating mechanism rigidly supports the wheel to ensure that the posture of the mobile robot is stable when the robotic arm moves; when the braking mechanism releases the ball screw, the wheel floating mechanism performs floating buffering to the wheel, and the ball screw can rotate in the first bearing and the second bearing as driven by the screw nut at this moment, so that the screw nut can move up and down along the ball screw and cause the pressure change of the compression spring when moving up and down, thus realizing the floating buffering of the wheel, ensuring that all four wheels touch the ground when the robot walks, providing a sufficient ground grasping force, and reducing the swing of the robot.

### BRIEF DESCRIPTION OF DRAWINGS

In order to provide a clearer explanation to the technical solutions in the embodiments of the present disclosure or the prior art, a brief introduction will be given below to the accompanying drawings required for the description of the embodiments or the prior art. It is obvious that the accompanying drawings described below are only embodiments of the present disclosure. For those ordinarily skilled in the art, other drawings can be obtained based on the provided drawings without creative labor. By reading the detailed description of non-limiting embodiments with reference to the following figures, other features, objectives, and advantages of the present disclosure will become more apparent.
FIG. 1 is a schematic structural diagram of a wheel floating mechanism according to an embodiment of the present disclosure.
FIG. 2 is a cross-sectional view of the wheel floating mechanism according to an embodiment of the present disclosure.
FIG. 3 is a schematic structural diagram of the wheel floating mechanism according to an embodiment of the present disclosure.
FIG. 4 is a schematic diagram of installation of a lead screw assembly according to an embodiment of the present disclosure.
FIG. 5 is a schematic structural diagram of a braking shaft according to an embodiment of the present disclosure.
FIG. 6 is a schematic diagram of cooperation between the wheel floating mechanism and a wheel according to an embodiment of the present disclosure.
FIG. 7 is a schematic structural diagram of the wheel floating mechanism mounted on a mobile base according to an embodiment of the present disclosure.
FIG. 8 is a schematic structural diagram of a mobile robot according to an embodiment of the present disclosure.

In the figures: 1 is a suspension guide seat; 2 is a suspension connection plate; 3 is a braking mechanism; 4 is an upper limit rod; 5 is a lower limit rod; 6 is a first guide rail; 7 is a first sliding block; 8 is a compression spring; 9 is a ball screw; 10 is a screw nut; 11 is an upper bearing seat; 101 is a guide plate; 102 is an upper end cover; 103 is a lower end cover; 301 is an electromagnet; 302 is a movable brake pad; 303 is a fixed brake pad; 304 is an upper cover plate; 100 is a wheel floating mechanism; 200 is a wheel; 300 is a mobile base; 400 is a robotic arm; and 500 is a suction cup assembly.

### DETAILED DESCRIPTION OF EMBODIMENTS

A detailed explanation of the present disclosure will be provided below in conjunction with specific embodiments. The following embodiments will help those skilled in the art further understand the present disclosure, but do not limit the present disclosure in any form. It should be pointed out that for those ordinarily skilled in the art, several modifications and improvements can be made without departing from the concept of the present disclosure. These all fall within the protection scope of the present disclosure.

It is important to note that when a component is referred to as "fixed" or "disposed" on another component, it can be either directly on or indirectly on the other component. When a component is referred to as "connected to" another component, it can be either directly connected to the other component or indirectly connected to the other component. In addition, the connection may be for either a fixation action or a circuit connection action.

It is to be understood that the orientation or position relationship indicated by the terms "length," "width," "upper," "lower," "front," "back," "left," "right," "vertical," "horizontal," "top," "bottom," "inside," "outside," etc., is based on the orientation or position relationship shown in the accompanying drawings for the sole purpose of facilitating the description of embodiments of the present disclosure and simplifying the description, and not for the purpose of indicating or implying that the devices or components referred to must have a specific orientation and be constructed and operated in a specific orientation, and therefore cannot be understood as a limitation to the present disclosure.

In addition, terms "first" and "second" are used only for descriptive purposes and cannot be understood as indicating or implying relative importance or implicitly indicating the amount of technical features indicated. As a result, a feature defined by "first" or "second" may include one or more of the feature expressly or implicitly. In the description of embodiments of the present disclosure, "multiple" means two or more unless otherwise specifically defined.

A wheel floating mechanism provided according to the present disclosure comprises: a suspension guide seat comprising a guide plate, an upper end cover, and a lower end cover, wherein the upper end of the guide plate is provided with the upper end cover, and the lower end thereof is provided with the lower end cover; a ball lead screw assembly comprising a ball screw and a screw nut, wherein the upper end of the ball screw is connected to the upper end cover through a first bearing, the lower end thereof is connected to the lower end cover through the second bearing, and the screw nut is rotatably connected to the ball screw; a suspension connection plate that is connected to the ball screw through the screw nut and is used for installing a wheel; a braking mechanism used for braking the ball screw after receiving a wheel control signal; and a compression spring sleeved on the outer side of the ball screw with the lower end thereof connected to the suspension connection plate and the upper end thereof connected to the upper end cover.

In embodiments of the present disclosure, when the braking mechanism brakes the ball screw, the screw nut cannot move up and down along the ball screw at this moment, and the wheel floating mechanism rigidly supports the wheel to ensure that the posture of the mobile robot is stable when the robotic arm moves; when the braking mechanism releases the ball screw, the wheel floating mechanism performs floating buffering to the wheel and can apply a ground grasping force to the vehicle via the spring, and the ball screw can rotate in the first bearing and the second bearing as driven by the screw nut at this moment, so that the screw nut can move up and down along the ball screw and cause the pressure change of the compression spring when moving up and down, thus realizing the floating buffering of the wheel, ensuring that all four wheels touch the ground when the robot walks, providing a sufficient ground grasping force, and reducing the swing of the robot.

The core concept of the present disclosure is described above. In order to make the above objectives, characteristics, and advantages of the present disclosure more clearly and easily understood, the technical solutions in embodiments of the present disclosure are described clearly and completely in combination with the accompanying drawings in the embodiments of the present disclosure. It is obvious that the described embodiments are only a portion of embodiments of the present disclosure, not all the embodiments. Based on the embodiments of the present disclosure, all other embodiments obtained by a person of ordinary skill in the art without creative labor fall within the scope of protection of the present disclosure.

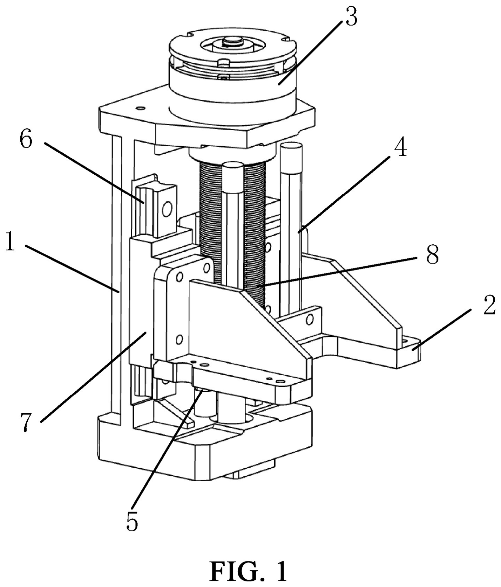

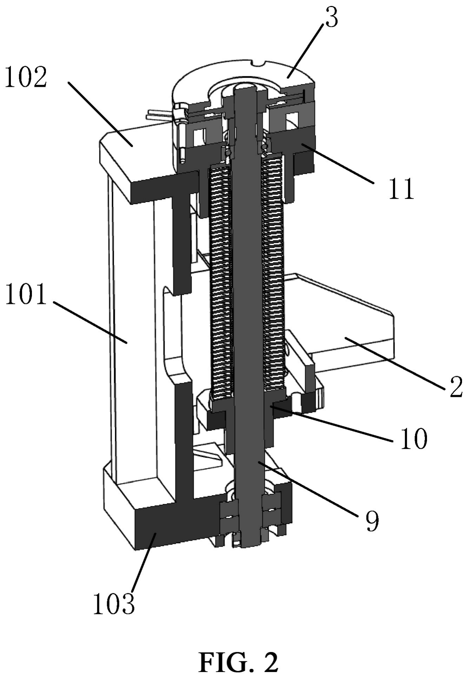

FIG. 1 is a schematic structural diagram of a wheel floating mechanism according to an embodiment of the present disclosure, and FIG. 2 is a cross-sectional view of the wheel floating mechanism in the embodiment of the present disclosure. As shown in FIG. 1 and FIG. 2, the wheel floating mechanism provided in the present disclosure includes: a suspension guide seat 1, the suspension guide seat 1 comprising a guide plate 101, an upper end cover 102, and a lower end cover 103, wherein the upper end of the guide plate 101 is provided with the upper end cover 102, and the lower end thereof is provided with the lower end cover 103.

In the embodiment of the present disclosure, the guide plate 101, the upper end cover 102, and the lower end cover 103 are of an integral structure.

A ball lead screw assembly comprising a ball screw 9 and a screw nut 10, wherein the upper end of the ball screw 9 is connected to the upper end cover 102 through a first bearing, the lower end thereof is connected to the lower end cover 103 through the second bearing, and the screw nut 10 is rotatably connected to the ball screw 9; a suspension connection plate 2, the suspension connection plate 2 being connected to the ball screw 9 through the screw nut 10, and the suspension connection plate 2 being used for installing a wheel; a braking mechanism 3 used for braking the ball screw 9 after receiving a wheel control signal; and a compression spring 8 sleeved on the outer side of the ball screw 9 with the lower end of the compression spring 8 connected to the suspension connection plate 2 and the upper end thereof connected to the upper end cover 102.

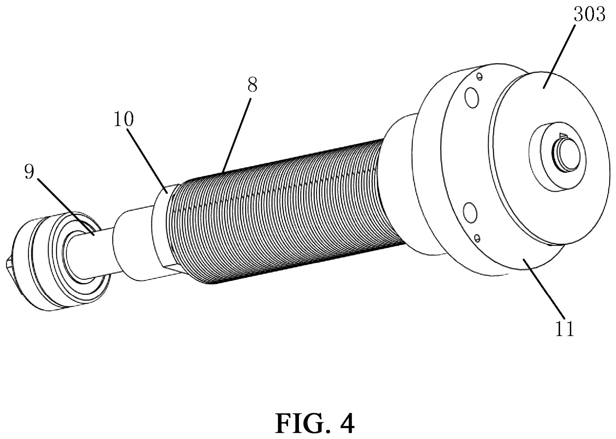

In the disclosed embodiment, as shown in FIG. 4, the ball screw 9 is coaxially disposed with the compression spring 8, and the guide plate 101 is parallel to the compression spring 8; the upper end cover 102 and the lower end cover 103 above are perpendicular to the guide plate 101, and the upper end cover 102 and the lower end cover 103 are thus parallel.

In the embodiment of the present disclosure, when the braking mechanism 3 is powered off, the braking mechanism 3 brakes the ball screw 9, thereby achieving rigid support of the wheel; and when the braking mechanism 3 is powered on, the ball screw 9 can rotate in the first bearing and the second bearing as driven by the screw nut 10, and the screw nut 10 moves up and down along the ball screw 9 to realize floating buffering of the wheel.

In the embodiment of the present disclosure, when the screw nut 10 moves upward along the ball screw 9, the compression spring 8 is compressed, and when the screw nut 10 moves downward along the ball screw 9, the compression spring 8 is stretched, thereby achieving the floating buffering of the wheel through the energy storage and release of the compression spring 8.

In the embodiment of the present disclosure, a first guide rail 6 and a second guide rail are respectively provided on the front side surface of the guide plate 101 and disposed on two sides of the compression spring 8; the suspension connection plate 2 is connected to the first guide rail 6 through a first sliding block 7 and is connected to the second guide rail through a second sliding block.

In the embodiment of the present disclosure, the first guide rail 6 and the second guide rail are disposed in parallel, and the suspension connection plate 2 can slide along the first guide rail 6 and the second guide rail through the first sliding block 7 and the second sliding block.

In the embodiment of the present disclosure, the upper side surface of the suspension connection plate 2 is provided with an upper limit rod 4, and when the suspension connection plate 2 moves upward, the upper limit rod 4 abuts against the upper end cover 102 for limiting; and the lower side surface of the suspension connection plate 2 is provided with a lower limit rod 5, and when the suspension connection plate 2 moves downward, the lower limit rod 5 abuts against the lower end cover 103 for limiting.

In the embodiment of the present disclosure, a first threaded hole is provided on the suspension connection plate 2, and the upper limit rod 4 is connected to the upper side surface of the suspension connection plate 2 through the first threaded hole; a second threaded hole is provided on the suspension connection plate 2, and the lower limit rod 5 is connected to the lower side surface of the suspension connection plate 2 through the second threaded hole.

In the embodiment of the present disclosure, a free end of the limit rods is provided with a shock absorbing pad for damping when the upper limit rod 4 and the upper end cover 102 are in contact and for damping when the lower limit rod 5 and the lower end cover 103 are in contact.

In the embodiment of the present disclosure, the upper limit rod 4 performs limiting by contacting the upper end cover 102 through the shock-absorbing pad provided thereon, the shock-absorbing pad being capable of alleviating the shock when in contact; and the lower limit rod 5 performs limiting by contacting the lower end cover 103 through the shock-absorbing pad provided thereon, the shock-absorbing pad being capable of alleviating the shock when in contact.

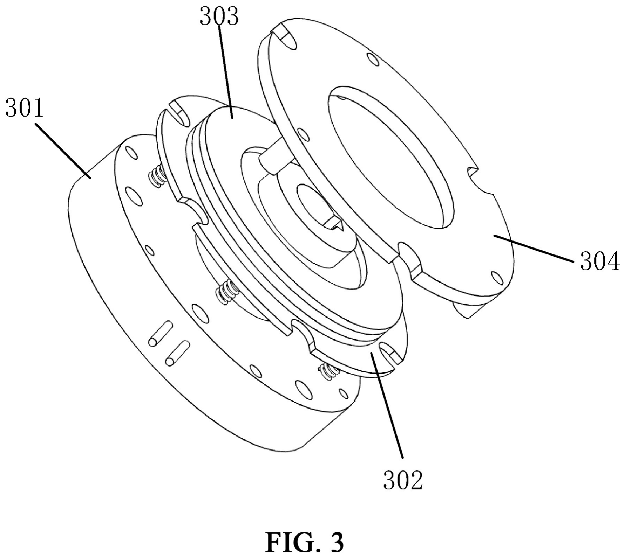

FIG. 3 is a schematic structural diagram of the braking mechanism in the embodiment of the present disclosure. As shown in FIG. 3, the braking mechanism 3 comprises an electromagnet 301, an upper cover plate 304, a movable brake pad 302, and a fixed brake pad 303; the movable brake pad 302 is connected to the electromagnet 301 through an elastic member; the sleeve of the fixed brake pad 303 is sleeved on the ball screw 9; the main brake plate of the fixed brake pad 303 is arranged between the movable brake plate 302 and the upper cover plate 304; the electromagnet 301 is used for applying an electromagnetic force to the movable brake pad 302; when the electromagnet 301 is powered on, the electromagnet 301 absorbs the movable brake pad 302, and at this moment, the elastic member is in a compressed state, and the ball screw 9 can rotate; and when the electromagnet 301 is powered off, the movable brake pad 302 is driven by the elastic member to move towards the fixed brake pad 303 to brake the ball screw 9.

The upper cover plate 304 is fixed to the electromagnet 301.

A spring is used as the elastic member.

In a variant example of the present disclosure, the braking mechanism comprises an electromagnet 301, a braking shaft, a locking pin, and an elastic member; the sleeve of the braking shaft is sleeved on the ball screw 9, and a plurality of locking holes are arranged in sequence circumferentially on the main body plate of the braking shaft; the locking pin is connected to the electromagnet 301 by means of the elastic member; the electromagnet 301 is used for applying an electromagnetic force to the locking pin; when the electromagnet 301 is powered on, the electromagnet 301 absorbs the locking pin, and at this moment, the elastic member is in a compressed state, and the ball screw 9 can rotate; and when the electromagnet 301 is powered off, the locking pin is driven by the elastic pad to move towards the braking shaft so that the locking pin cooperates with the locking holes to brake the ball screw 9.

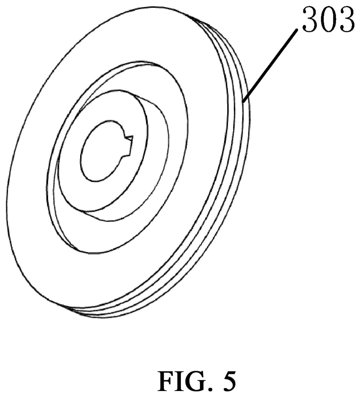

FIG. 5 is a schematic structural diagram of the braking shaft in the embodiment of the present disclosure. As shown in FIG. 5, the fixed brake block 303 comprises a sleeve and a main brake plate; the sleeve is connected to one side surface of the main brake plate and is located at the center of the main brake plate; and the sleeve is fixedly connected to the ball screw 9; the electromagnet 301, the movable brake pad 302, and the fixed brake pad 303 are provided with a through hole penetrating circumferentially, and the sleeve is arranged in the through hole.

In the embodiment of the present disclosure, the upper end cover 102 is provided with a first mounting hole penetrating in the thickness direction; an upper bearing seat 11 is disposed inside the first mounting hole; the first bearing is disposed inside the upper bearing seat 11; the lower end cover 103 is provided with a second mounting hole penetrating in the thickness direction; and the second bearing is disposed in the second mounting hole.

In the embodiment of the present disclosure, the lower end of the ball screw 9 is provide with a fixing nut to limit the ball screw 9 on the second bearing; a bearing end cover is provided on the outer end of the second mounting hole, and the bearing end cover is used for limiting the second bearing inside the second mounting hole.

In the embodiment of the present disclosure, the upper bearing seat 11 comprises a fixed end cover and a limit sleeve; one end of the limit sleeve is connected to one side surface of the fixed end cover; the limit sleeve passes through the first mounting hole; the fixed end cover is positioned on the upper side surface of the upper end cover 102; a bearing mounting hole is provided on the fixed end cover; the first bearing is disposed inside the bearing mounting hole; the first bearing is disposed inside the bearing mounting hole; and the bearing mounting hole is in communication with the limit sleeve, so that the upper end of the ball screw 9 passes through the limit sleeve to be connected to the first bearing.

In the embodiment of the present disclosure, the inner cavity diameter of the limit sleeve is larger than the inner diameter of the bearing mounting hole; the upper end of the compression spring 8 is arranged in the limit sleeve and abuts on the inner side surface of the fixed end cover.

The electromagnet 301 is disposed on the upper side surface of the fixed end cover.

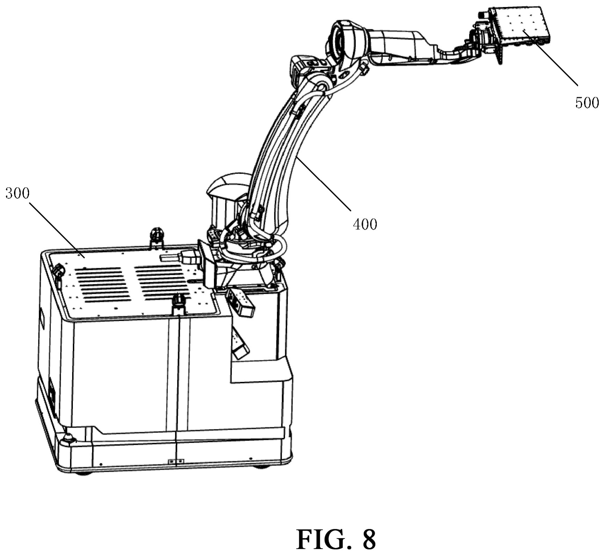

FIG. 8 is a schematic structural diagram of a mobile robot according to an embodiment of the present disclosure. As shown in FIG. 8, the mobile robot provided in the present disclosure comprises the wheel floating mechanism 100 and further comprises: a mobile base 300 used for moving to any position or pausing at any position according to a received control command; a robotic arm 400 disposed on the mobile base 300 and for moving a target box body conveyed by a conveyor belt to a target position or moving a target box body on a material release position to the conveyor belt; the end of the robotic arm 400 is provided with a fixture, the fixture can be a suction cup assembly, the suction cup assembly comprises a back plate, a suction cup main body plate, and a suction cup, the upper end surface of the back plate is connected to one side of the suction cup main body plate, and a right angle is formed between the back plate and the suction cup main body plate. A plurality of suction cups are arranged on the lower side surface of the suction cup main body plate, and materials are sucked through the suction cups.

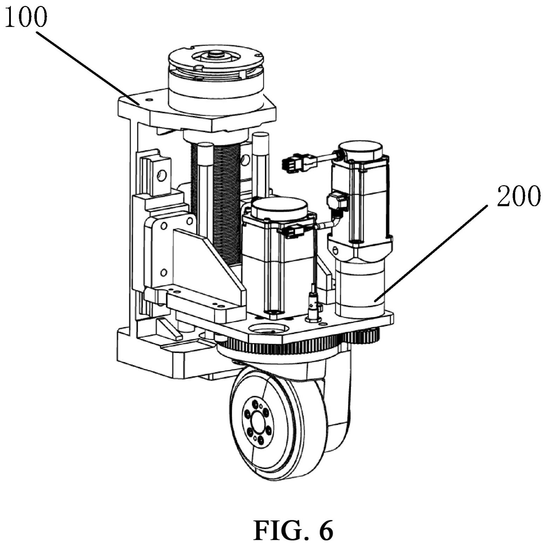

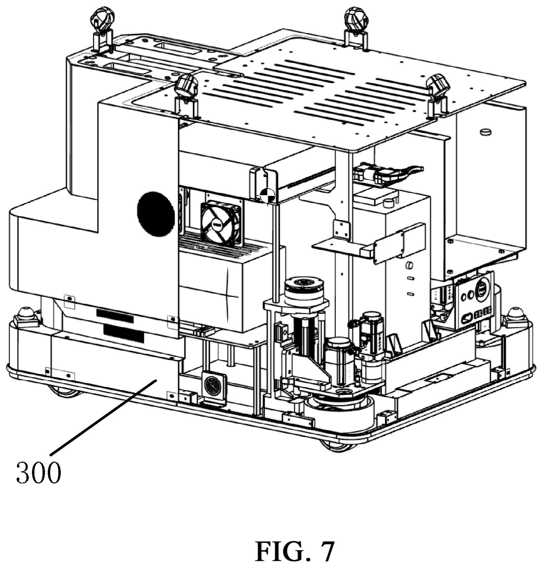

As shown in FIG. 7, the angular end of the mobile base 300 is provided with the wheel floating mechanism 100; the wheel floating mechanism 100 is provided with a wheel 200, and as shown in FIG. 6, the wheel floating mechanism 100 is used for floating buffering the wheel so as to remain stable on uneven ground or rigidly support the wheel 200; and the wheel 200 is used for driving the mobile base 300 to move.

When the braking mechanism 3 brakes the ball screw 9, the screw nut 10 cannot move up and down along the ball screw 9 at this moment, and the wheel floating mechanism 100 rigidly supports the wheel 200 to ensure that the posture of the mobile robot is stable when the robotic arm moves; when the braking mechanism 3 releases the ball screw 9, the wheel floating mechanism 100 performs floating buffering to the wheel 200, and the ball screw 9 can rotate in the inner rings of the first bearing and the second bearing as driven by the screw nut 10 at this moment, so that the screw nut 10 can move up and down along the ball screw 9 and cause the pressure change of the compression spring 8 when moving up and down, thus realizing the floating buffering of the wheel 200, ensuring that all four wheels touch the ground when the robot walks, providing a sufficient ground grasping force, and reducing the swing of the robot.

The various embodiments in the present specification are described in a progressive manner, with each embodiment emphasizing its differences from other embodiments. Cross reference can be made to the embodiments for the same and similar parts therebetween. The above description of the disclosed embodiments enables those skilled in this field to implement or use the present disclosure. Various modifications to these embodiments will become apparent to those skilled in the art, and the general principles defined herein can be implemented in other embodiments without departing from the spirit or scope of the present disclosure. Therefore, the present disclosure will not be limited to the embodiments shown herein, but will be within the widest scope consistent with the principles and novel features disclosed herein.

The specific embodiments of the present disclosure have been described above. It should be understood that the present disclosure is not limited to the specific implementation manners described above. Those skilled in the art may make various modifications or alterations within the scope of the claims, which does not affect the substantive content of the present disclosure.

## Claims

1. A wheel floating mechanism, comprising:
a suspension guide seat that comprises a guide plate, an upper end cover, and a lower end cover, wherein the upper end of the guide plate is provided with the upper end cover, and the lower end thereof is provided with the lower end cover;
a lead screw assembly that comprises a ball screw and a screw nut, wherein the upper end of the ball screw is connected to the upper end cover through a first bearing, the lower end thereof is connected to the lower end cover through a second bearing, and the screw nut is rotatably connected with the ball screw;
a suspension connection plate that is connected to the ball screw through the screw nut and is used for installing a wheel;
a braking mechanism used for braking or releasing the ball screw; and
a compression spring sleeved on the outer side of the ball screw with the lower end thereof connected to the suspension connection plate and the upper end thereof connected to the upper end cover.

2. The wheel floating mechanism according to claim 1,
wherein when the braking mechanism brakes the ball screw, rigid support is implemented for the wheel; and
wherein when the braking mechanism releases the ball screw, the ball screw can rotate in the first bearing and the second bearing as driven by the screw nut, and the screw nut moves up and down along the ball screw to realize floating buffering of the wheel.

3. The wheel floating mechanism according to claim 1,
wherein a first guide rail and a second guide rail are respectively provided on the front side surface of the guide plate and disposed on two sides of the compression spring; and
wherein the suspension connection plate is connected to the first guide rail through a first sliding block and is connected to the second guide rail through a second sliding block.

4. The wheel floating mechanism according to claim 1,
wherein the upper side surface of the suspension connection plate is provided with an upper limit rod;
wherein when the suspension connection plate moves upward, the upper limit rod abuts against the upper end cover for limiting;
wherein the lower side surface of the suspension connection plate is provided with a lower limit rod; and
wherein when the suspension connection plate moves downward, the lower limit rod abuts against the lower end cover for limiting.

5. The wheel floating mechanism according to claim 4, wherein a free end of the limit rods is provided with a shock absorbing pad for damping when the upper limit rod and the upper end cover are in contact and for damping when the lower limit rod and the lower end cover are in contact.

6. The wheel floating mechanism according to claim 1,
wherein the braking mechanism comprises an electromagnet, an upper cover plate, a movable brake pad, and a fixed brake pad;
wherein the movable brake pad is connected to the electromagnet through an elastic member; the sleeve of the fixed brake pad is sleeved on the ball screw, and the main brake plate of the fixed brake pad is arranged between the movable brake pad and the upper cover plate;
wherein the electromagnet is used for applying an electromagnetic force to the movable brake pad;
wherein when the electromagnet is powered on, the electromagnet absorbs the movable brake pad, and at this moment, the elastic member is in a compressed state, and the ball screw can rotate; and
wherein when the electromagnet is powered off, the movable brake pad is driven by the elastic pad to move towards the fixed brake pad to brake the ball screw.

7. The wheel floating mechanism according to claim 1,
wherein the upper end cover is provided with a first mounting hole penetrating in the thickness direction;
wherein an upper bearing seat is disposed inside the first mounting hole;
wherein the first bearing is disposed inside the upper bearing seat;
wherein the lower end cover is provided with a second mounting hole penetrating in the thickness direction; and
wherein the second bearing is disposed inside the second mounting hole.

8. The wheel floating mechanism according to claim 7,
wherein the upper bearing seat comprises a fixed end cover and a limit sleeve;
wherein one end of the limit sleeve is connected to one side surface of the fixed end cover; the limit sleeve passes through the first mounting hole;
wherein the fixed end cover is positioned on the upper side surface of the upper end cover;
wherein a bearing mounting hole is provided on the fixed end cover;
wherein the first bearing is disposed inside the bearing mounting hole; and
wherein the bearing mounting hole is in communication with the limit sleeve, so that the upper end of the ball screw passes through the limit sleeve to be connected to the first bearing.

9. The wheel floating mechanism according to claim 1,
wherein the braking mechanism comprises an electromagnet, a braking shaft, a locking pin, and an elastic member;
wherein the sleeve of the braking shaft is sleeved on the ball screw, and a plurality of locking holes are arranged in sequence circumferentially on the main body plate of the braking shaft;
wherein the locking pin is connected to the electromagnet by means of the elastic member;
wherein the electromagnet is used for applying an electromagnetic force to the locking pin;
wherein when the electromagnet is powered on, the electromagnet absorbs the locking pin, and at this moment, the elastic member is in a compressed state, and the ball screw can rotate; and
wherein when the electromagnet is powered off, the locking pin is driven by the elastic pad to move towards the braking shaft so that the locking pin cooperates with the locking holes to brake the ball screw.

10. A mobile robot comprising:
a wheel floating mechanism, comprising:
a suspension guide seat that comprises a guide plate, an upper end cover, and a lower end cover, wherein the upper end of the guide plate is provided with the upper end cover, and the lower end thereof is provided with the lower end cover;
a lead screw assembly that comprises a ball screw and a screw nut, wherein the upper end of the ball screw is connected to the upper end cover through a first bearing, the lower end thereof is connected to the lower end cover through a second bearing, and the screw nut is rotatably connected with the ball screw;
a suspension connection plate that is connected to the ball screw through the screw nut and is used for installing a wheel;
a braking mechanism used for braking or releasing the ball screw; and
a compression spring sleeved on the outer side of the ball screw with the lower end thereof connected to the suspension connection plate and the upper end thereof connected to the upper end cover;
a mobile base used for moving to any position or pausing at any position and determining an orientation angle according to a received control command; and
a robotic arm disposed on the mobile base and for moving a target box body conveyed by a conveyor belt to a target position or moving a target box body on a material release position to the conveyor belt;
wherein the angular end of the mobile base is provided with the wheel floating mechanism; the wheel floating mechanism is provided with a wheel;
wherein the wheel floating mechanism is used for floating buffering the wheel so as to remain stable on uneven ground or rigidly support the wheel; and
wherein the wheel is used for driving the mobile base to move.
